# EUROPÄISCHE PATENTSCHRIFT

(11) **EP 0 961 046 B1**
(45) Veröffentlichungstag und Bekanntmachung des Hinweises auf die Patenterteilung: **14.08.2002**
(21) Anmeldenummer: 98109518.5
(22) Anmeldetag: 26.05.1998
(51) Int. Cl.: F16D 41/20, H02K 7/108

(54) **Antriebsvorrichtung für ein Stellglied**
Driving device for a positioning element
Dispositif d'entraînement d'un élément positionneur

(43) Veröffentlichungstag der Anmeldung: 01.12.1999
(73) Patentinhaber: Siemens Building Technologies AG, 6300 Zug (CH)
(72) Erfinder: Studer, Werner, 6314 Oberägeri (CH)
(74) Vertreter: Berg, Peter

(56) Entgegenhaltungen:
- EP-A- 0 463 248
- US-A- 4 630 722
- US-A- 5 064 137
- PATENT ABSTRACTS OF JAPAN vol. 095, no. 010, 30. November 1995 & JP 07 174160 A (NTN CORP), 11. Juli 1995
- PATENT ABSTRACTS OF JAPAN vol. 018, no. 644 (M-1718), 7. Dezember 1994 & JP 06 249257 A (NTN CORP), 6. September 1994

## Beschreibung

Die Erfindung bezieht sich auf eine Antriebsvorrichtung der im Oberbegriff des Anspruchs 1 genannten Art.

Solche Antriebsvorrichtungen werden vorteilhaft in Heizungs-, Lüftungs und Klimaanlagen zur Betätigung von Stellgliedern wie Ventilen oder Klappen und dergleichen verwendet. Die Antriebsvorrichtungen arbeiten in einem gewissen Drehwinkelbereich, der in der Regel beidseitig durch einen mechanischen Anschlag begrenzt und damit blockiert wird. Die notwendige Blockierung stoppt die Drehbewegung eines Motors und bringt den Nachteil, dass die Antriebsvorrichtung insbesondere in blockiertem Zustand unzulässig starke Geräusche generiert, deren Ursache ein unruhiges Verhalten des blockierten oder belasteten Motors ist.

Der Nachteil der Geräuschgenerierung kann durch lastabhängige elektronische Endabschalter für den Motor oder durch das Einfügen einer magnetischen Hysteresekupplung zwischen Motor und Getriebe ausgeglichen werden.

Es ist an sich bekannt, in einer Antriebsvorrichtung eine Schlingfederkupplung einzusetzen um einen Antriebsmotor von einem maximal übertragbaren Drehmoment abhängig von einer nachfolgenden Getriebestufe zu entkoppeln. Ausführungsformen von Schlingfederkupplungen sind beispielsweise aus EP 678 685 A1, aus US 3 125 889 und aus US 3 893 554 bekannt. Federkupplungen, bei denen ein übertragbares Drehmoment mechanisch regelbar oder von Hand einstellbar ist, sind aus EP 463 248 A, US 5 064 137 und JP 7 174 160 bekannt.

Es ist eine Antriebsvorrichtung dieser Art bekannt (DE 195 16 973 A1), bei der ein Stellrad eines Stellgliedes über eine Freilaufkupplung mit einem Antriebsmotor gekoppelt ist, wobei die Freilaufkupplung als Schlingfederkupplung verwirklicht ist.

Beim Einsatz derartiger Schlingfederkupplungen werden jedoch die beschriebenen Geräusche jeweils in den Übergangsbereichen generiert, in denen die Schlingfederkupplung wirksam wird.

Der Erfindung liegt die Aufgabe zugrunde, eine Antriebsvorrichtung mit einer Schlingfederkupplung derart zu gestalten, dass ein insbesondere im blockierten oder belasteten Zustand des Antriebs auftretendes Geräusch minimal ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein Funktionsblockdiagramm des prinzipiellen Aufbaus einer Antriebsvorrichtung mit einer Freilaufkupplung,
- Fig. 2: eine vorteilhafte Ausführung der Freilaufkupplung,
- Fig. 3: eine weitere Ansicht der Freilaufkupplung, und
- Fig. 4: eine Variante der Freilaufkupplung.

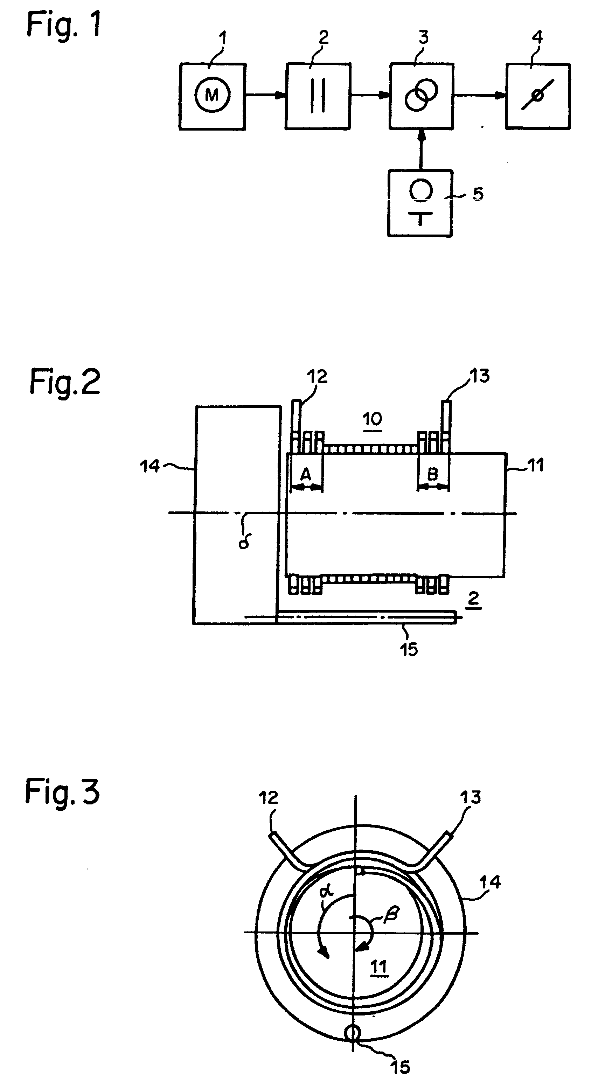

In der Fig. 1 bedeutet 1 einen Motor der über eine Freilaufkupplung 2 und ein Getriebe 3 mit einem Stellglied 4 derart gekoppelt ist, dass das Stellglied 4 durch den Motor 1 in zwei Richtungen betätigbar ist.

Der Motor 1 ist als Elektromotor, beispielsweise als Synchronmotor verwirklicht. In einer Variante der Antriebsvorrichtung wird das Stellglied 4 in besonderen Fällen - beispielsweise zum Rückstellen des Stellgliedes 4 bei Stromausfall - nicht elektrisch, sondern beispielsweise über einen Federmotor betätigt.

Mit Vorteil weist die Antriebsvorrichtung auch eine Bremse 5 auf, welche vorteilhafterweise am Getriebe ansetzt und unerwünschte Bewegungen in der Antriebsvorrichtung auch in einem lastlosen Zustand unterdrückt.

Die Freilaufkupplung 2 ist erfindungsgemäss als Schlingfederkupplung verwirklicht.

In der Fig. 2 weist die Freilaufkupplung 2 eine Schlingfeder 10 auf, welche um eine Welle 11 gewickelt ist und deren Enden mit 12 und 13 bezeichnet sind. Ein um eine Drehachse δ drehbares Element 14 weist ein Mitnehmerelement 15 auf, welches derart angeordnet und ausgebildet ist, dass in einer ersten Drehrichtung der Welle 11 das drehbare Element 14 durch ein erstes Ende 12 der Schlingfeder 10 und in der zweiten Drehrichtung der Welle 11 das drehbare Element 14 durch das zweite Ende 13 antreibbar ist. Im dargestellten Ausführungsbeispiel ist der Motor 1 direkt mit der Welle 11 verbunden, während das drehbare Element 14 ein Teil des Getriebes 3 - beispielsweise ein Ritzel - ist.

Es versteht sich von selbst, dass die Antriebsvorrichtung grundsätzlich auch so aufbaubar ist, dass das drehbare Element 14 ein Teil des Motors 1 ist, während die Welle 11 ein Teil des Getriebes 3 ist.

In einem Endbereich A des ersten Endes 12 der Schlingfeder 10 und in einem Endbereich B des zweiten Endes 13 der Schlingfeder 10 weisen die Windungen der Schlingfeder 10 einen grösseren Windungsdurchmesser auf als im mittleren Bereich der Schlingfeder 10, der zwischen den beiden Endbereichen A und B liegt. Die Schlingfeder 10 liegt also in den beiden Endbereichen A und B nicht an der Welle 11 an.

In der Fig. 3 ist die in der Fig. 2 als Seitenriss dargestellte Ausführung der Schlingfederkupplung 2 als Aufriss dargestellt. Beim Drehen der Welle 11 im Drehsinn α um die Drehachse δ wird die an die Welle 11 gekuppelte Schlingfeder 10 mit der Welle im Drehsinn α gedreht, wobei das drehbare Element 14 durch das vom ersten Ende 12 der Schlingfeder 10 erfasste Mitnehmerelement 15 mitgedreht wird. Das drehbare Element 14 und damit das Stellglied 14 (Fig. 1) sind vom Motor 1 so lang antreibbar, bis die Antriebsvorrichtung durch einen nicht dargestellten Anschlag begrenzt wird. Durch die besagte Begrenzung wirkt über das Mitnehmerelement 15 und das erste Ende 12 ein Drehmoment auf die Schlingfeder 10 ein, welches die Schlingfeder 10 von der Welle 11 löst, wodurch die Freilaufkupplung 2 gelöst wird.

Beim Drehen der Welle 11 im dem Drehsinn α entgegengesetzen Drehsinn β wird die an die Welle 11 gekuppelte Schlingfeder 10 mit der Welle im Drehsinn β gedreht, wobei das drehbare Element 14 durch das vom zweiten Ende 13 der Schlingfeder 10 erfasste Mitnehmerelement 15 mitgedreht wird. Das drehbare Element 14 und damit das Stellglied 14 (Fig. 1) sind vom Motor 1 so lang antreibbar, bis die Antriebsvorrichtung durch einen nicht dargestellten Anschlag begrenzt wird. Durch die besagte Begrenzung wirkt über das Mitnehmerelement 15 und das zweite Ende 13 ein Drehmoment auf die Schlingfeder 10 ein, welches die Schlingfeder 10 von der Welle 11 löst, wodurch die Freilaufkupplung 2 gelöst wird.

Die beiden Endbereiche A und B weisen je mindestens eine Windung auf. Mit Vorteil hat der Endbereich A bzw. B etwa eine bis fünf Windungen, wobei die Anzahl der Windungen durch die erforderliche Drehwinkeleastizität bestimmt wird. Unter Drewinkelelastizität wird hier der Drehwinkel verstanden, den der Motor dann noch aufzuwenden hat, wenn die Antriebsvorrichtung begrenzt wird, damit die Freilaufkupplung 2 gelöst wird.

Es zeigt sich, dass die Geräuschbildung wesentlich verringert wird, wenn die Freilaufkupplung eine Winkelelastizität von etwa 30° bis 40° aufweist.

Die Freilaufkupplung 2 gemäss der vorliegenden Erfindung weist eine Schlingfeder 10 auf, die an dem Ende 12 oder 13, von dem her die Kupplungsfunktion lösbar ist, im Endbereich A oder B mindestens eine Windung aufweist, deren Durchmesser grösser ist als der Durchmesser einer in diesem Endbereich A oder B der Schlingfeder 10 liegenden Welle 11, um welche die Schlingfeder 10 gewickelt ist, so dass die Schlingfeder 10 im besagten Endbereich A oder B nicht an der Welle 11 anliegt.

In einer vorteilhaften Ausführung der Schlingfeder 10 sind die beiden Enden 12 und 13 derart aufgebogen, dass diese durch das Mitnehmerelement 15 zur Drehmomenten-Übertragung zwischen der Welle 11 und dem drehbaren Element 14 erfassbar sind.

In der Antriebsvorrichtung mit der vorteilhaften Freilaufkupplung 2 wird eine Geräuschbildung wirksam unterbunden, welche vor allem beim Blockieren der Antriebsvorrichtung insbesondere im Getriebe 3 duch ein Schwingen des Motors 1 auftreten würden.

Dadurch, dass das Mitnehmerelement 15 direkt an den Federenden 12 und 13 angreift, wird die Masse an den Koppelungspunkten zwischen dem Mitnehmerelement 15 und der Schlingfeder 10 minimiert, wodurch die Geräuschbildung maximal unterdrückt wird, da die massearmen Koppelungspunkte den Schwingen des belasteten oder blockierten Motores 1 zu folgen vermögen, ohne dass des Mitnehmerelement 15 vom Federende 12 oder 13 abhebt. Ein Aufschlagen des abgehobenen Mitnehmerelementes 15 auf das Federende 12 oder 13 beim Schwingen des belasteten oder blockierten Motores 1 würde die störende Geräuschbildung erhöhen.

Dadurch, dass die beiden Enden 12 und 13 der Schlingfeder 10 derart geformt sind, dass diese durch das Mitnehmerelement 15 zur Drehmomenten-Übertragung zwischen der Welle 11 und dem drehbaren Element 14 erfassbar sind, wird eine wesentliche Vergrösserung der zulässigen axialen Montagetoleranz zwischen der Welle 11 und dem drehbaren Element 14 erreicht, ohne dass störenden Kräfte zwischen der Welle 11 und dem drehbaren Element 14 auftreten. Die tatsächliche Lage der Drehachse des drehbaren Elementes 14 und die tatsächliche Lage der Drehachse der Welle 11 dürfen bei der fertig montierten Antriebsvorrichtung relativ stark - also beispielsweise mehrere Zehntel eines Millimeters - von der idealen gemeinsamen Drehachse δ (Fig. 2) abweichen, ohne dass die Funktion der Antriebsvorrichtung beeinträchtigt wird und ohne dass besondere Abnützungserscheinungen an der Antriebsvorrichtung auftreten.

Derartige Antriebsvorrichtungen verfügen in der Regel über eine selbsttätige Rückstellfunktion. Ein bei einem Stromausfall am Motor 1 auftretendes Wegfallen des Antriebsmomentes des Motors 1 löst eine selbsttätige Rückstellfunktion der Antriebsvorrichtung aus, wonach das Federdrehmoment bzw. die Federenergie einer gespannten Rückstellfeder das Stellglied 4 in eine vorbestimmte Lage bringt.

Die Schlingfeder 10 mit den Endbereichen A und B ermöglicht das Speichern von Energie, mit welcher wenigstens ein magnetisches Rastmoment des Motors 1 und ein durch Lagerreibung verursachtes Haftmoment des Getriebes 3 überwindbar ist, welches die selbsttätige Rückstellfunktion der Antriebsvorrichtung unterstützt. Dadurch dass das Rastmoment des Motors 1 und das Haftmoment des Getriebes 3 durch die Energie der Schlingfeder 10 überwunden wird, kann die Rückstellfeder ohne Einbusse an Sicherheit wesentlich kleiner dimensioniert werden, was einerseits Platz und Gewicht spart und andererseits auch Kosten reduziert.

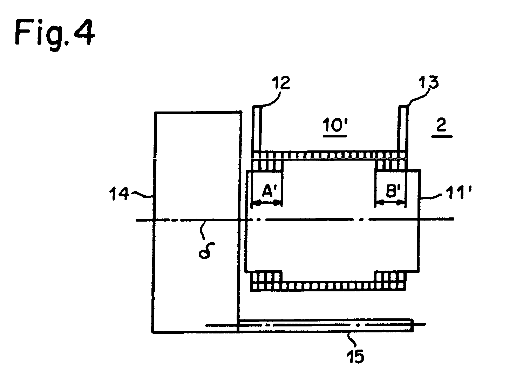

In der Fig. 4 ist eine im wesentlichen mit konstantem Windungsdurchmesser gewickelte Schlingfeder 10' auf einer Welle 11' angeordnet. In einem Endbereich A' des ersten Endes 12 der Schlingfeder 10' und in einem Endbereich B' des zweiten Endes 13 der Schlingfeder 10' weist die Welle 11' einen geringeren Durchmesser auf als im mittleren Bereich der Schlingfeder 10', der zwischen den beiden Endbereichen A' und B' liegt. Die Schlingfeder 10' liegt also in den beiden Endbereichen A' und B' nicht an der Welle 11' an. Die in der Fig. 4 dargestellte Variante der Freilaufkupplung 2 mit den verjüngten Endbereichen A' und B' der Welle 11' weist prinzipiell gleiche Funktionsweise und Wirkung auf, wie die in den Fig. 2 und 3 beschriebene Ausführung.

Durch den Einsatz der Schlingfeder 10 bzw. 10' mit den Endbereichen A und B bzw. A' und B' ermöglicht in der Antriebsvorrichtung die kostengünstige Verwirklichung der folgenden Funktionen:
- Überlastschutz in beiden Drehrichtungen,
- Minimierung der durch den Motor verursachten Geräusentwicklung,
- sichere Überwindung von Rast- und Haftmoment in der Rückstellfunktion und
- axiale Montagetoleranz zwischen den Rotationsachsen des treibenden und des getriebenen Elementes.

## Patentansprüche

1. Antriebsvorrichtung mit einer Freilaufkupplung für ein Stellglied, wobei das Stellglied (4) von einem Motor (1) über die eine Schlingfeder (10; 10') aufweisende Freilaufkupplung (2) antreibbar ist,
**dadurch gekennzeichnet,**
**dass** die Schlingfeder (10; 10') wenigstens an einem Ende (12; 12'; 13; 13'), von dem her die Kupplungsfunktion lösbar ist, im Endbereich (A; A'; B; B') mindestens eine Windung aufweist, deren Durchmesser grösser ist als der Durchmesser einer in diesem Endbereich (A; A'; B; B') der Schlingfeder (10; 10') liegenden Welle (11; 11'), um welche die Schlingfeder (10; 10') gewickelt ist, so dass die Schlingfeder (10; 10') im besagten Endbereich (A; A'; B; B') nicht an der Welle (11; 11') anliegt.

2. Antriebsvorrichtung nach Anspruch 1, **dadurch gekennzeichnet,**
**dass** die Schlingfeder (10) im Endbereich (A; B;) mit grösserem Windungsdurchmesser gewickelt ist, als in einem mittleren Bereich der Schlingfeder (10).

3. Antriebsvorrichtung nach Anspruch 1, **dadurch gekennzeichnet,**
**dass** der Durchmesser der Welle (11') im Endbereich (A'; B') der Schlingfeder (10') verjüngt ist.

4. Antriebsvorrichtung nach einem vorangehenden Anspruch, **dadurch gekennzeichnet,**
**dass** die Schlingfeder (10; 10') nur eine einzige Welle (11; 11') umschlingt, während ein Ende (12; 13) der Schlingfeder (10; 10') von einem weiteren Element (15, 14) des Antriebs mitnehmbar ist.

5. Antriebsvorrichtung nach einem vorangehenden Anspruch, **daduch gekennzeichnet**,
dass das Ende (12; 13) der Schlingfeder (10) derart geformt ist, dass dieses durch ein Mitnehmerelement (15) zur Drehmomenten-Übertragung zwischen der Welle (11) und einem weiteren drehbaren Element (14) erfassbar ist.

## Claims

1. A drive device having a freewheel clutch for a control member, wherein the control member (4) is drivable by a motor (1) by way of the freewheel clutch (2) having a wrap spring (10; 10'),
**characterised in that**
at least at one end (12; 12'; 13' 13') from which the clutch function is releasable, the wrap spring (10; 10') has in the end region (A; A'; B; B') at least one turn whose diameter is larger than the diameter of a shaft (11; 11') which is **in that** end region (A; A'; B; B') of the wrap spring (10; 10') and around which the wrap spring (10; 10') is wound, so that in said end region (A; A'; B; B') the wrap spring (10; 10') does not bear against the shaft (11; 11').

2. A drive device according to claim 1 **characterised in that** the wrap spring (10) is wound in the end region (A; B) with a larger turn diameter than in a central region of the wrap spring (10).

3. A drive device according to claim 1 **characterised in that** the diameter of the shaft (11') in the end region (A'; B') of the wrap spring (10') is tapered.

4. A drive device according to a preceding claim **characterised in that** the wrap spring (10; 10') extends around only a single shaft (11; 11') while an end (12; 13) of the wrap spring (10; 10') is entrainable by a further element (15, 14) of the drive.

5. A drive device according to a preceding claim **characterised in that** the end (12; 13) of the wrap spring (10) is so shaped that it is engageable by an entrainment element (15) for torque transmission between the shaft (11) and a further rotatable element (14).

## Revendications

1. Dispositif d'entraînement comportant un accouplement à roue libre pour un organe de réglage, l'organe de réglage (4) pouvant être entraîné par un moteur (1) par l'intermédiaire de l'accouplement à roue libre (2) qui possède un ressort enroulé (10; 10'), **caractérisé en ce que** le ressort enroulé (10; 10') possède, au moins au niveau d'une extrémité (12; 12'; 13; 13'), à partir de laquelle la fonction d'accouplement peut être supprimée, dans la zone d'extrémité (A; A'; B; B'), au moins une spire, dont le diamètre est supérieur au diamètre d'un arbre (11; 11') qui est situé dans cette partie d'extrémité (A; A'; B; B') du ressort enroulé (10; 10') et autour duquel est enroulé le ressort enroulé (10; 10'), de sorte que le ressort enroulé (10; 10') ne s'applique pas contre l'arbre (11; 11') dans ladite zone d'extrémité (A; A'; B; B').

2. Dispositif d'entraînement selon la revendication 1, **caractérisé en ce que** le ressort enroulé (10) est enroulé dans la partie d'extrémité (A; B), la spire ayant un diamètre plus grand que dans la partie centrale du ressort enroulé (10).

3. Dispositif d'entraînement selon la revendication 1, **caractérisé en ce que** le diamètre de l'arbre (11') est réduit dans la partie d'extrémité (A; B') du ressort enroulé (10').

4. Dispositif d'entraînement selon l'une des revendications précédentes, **caractérisé en ce que** le ressort enroulé (10; 10') est enroulé sur un seul arbre (11; 11'), tandis que l'extrémité (12; 13) du ressort enroulé (10; 10') peut être entraînée normalement par un autre élément (15, 14) du dispositif d'entraînement.

5. Dispositif d'entraînement selon l'une des revendications précédentes, **caractérisé en ce que** l'extrémité (12; 13) du ressort enroulé (10) est conformée de telle sorte que cette extrémité peut être saisie par un élément d'entraînement (15) pour la transmission d'un couple entre l'arbre (11) et un autre élément rotatif (14).
